# EUROPEAN PATENT APPLICATION

(11) **EP 4 550 217 A1**
(43) Date of publication of application: **07.05.2025**
(21) Application number: 23845956.4
(22) Date of filing: 15.05.2023
(51) Int. Cl.: G06N 3/096, G06F 18/2431, G06N 3/045, G06N 3/0985

(54) **MACHINE LEARNING DEVICE, MACHINE LEARNING METHOD, AND MACHINE LEARNING PROGRAM**

(30) Priority: 28.07.2022 JP 2022120602
(71) Applicant: JVCKenwood Corporation, Yokohama-shi, Kanagawa 2210022 (JP)
(72) Inventor: YANG Yincheng, Yokohama-shi Kanagawa 221-0022 (JP)
(74) Representative: Pritzlaff, Stefanie Lydia
(86) International application number: PCT/JP2023/018119
(87) International publication number: WO 2024/024217

(57) **Abstract**

A feature extraction unit (10) extracts a feature of input data and generates a feature map. A prototype generation unit (12) receives the feature map and outputs a prototype of a feature of a class. A base class classification unit (20) receives the feature map of the input data and classifies the input data into the base class based on a weight of base class classification. A novel class classification (40) receives the feature map of the input data and classifies the input data into the novel class based on a weight of novel class classification. A federated classification unit (50) receives the prototype and the feature map of the input data and classifies the input data into classes based on a weight of federated classification derived from federating the weight of base class classification adjusted based on a metamodel and the weight of novel class classification.

## Description

### TECHNICAL FIELD

The present invention relates to machine learning technologies.

### BACKGROUND ART

Human beings can learn new knowledge through experiences over a long period of time and can maintain old knowledge without forgetting it. Meanwhile, the knowledge of a convolutional neutral network (CNN) depends on the dataset used in learning. To adapt to a change in data distribution, it is necessary to re-learn CNN parameters in response to the entirety of the dataset. In CNN, the precision estimation for old tasks will be decreased as new tasks are learned. Thus, catastrophic forgetting cannot be avoided in CNN. Namely, the result of learning old tasks is forgotten as new tasks are being learned in continual learning.

A more efficient and practical method proposed is incremental learning or continual learning in which the knowledge already acquired is reused, and new tasks are learned without forgetting the knowledge of past tasks. Continual learning is a learning method that improves a current trained model to learn new tasks and new data as they occur, instead of training the model from scratch. In deep learning, there is a phenomenon called catastrophic forgetting in which the knowledge acquired in the past is considerably lost, and the ability for tasks is considerably reduced. This presents a problem in continual learning in particular. Continual learning in a classification task is a method that allows migration from a state in which classification into base classes (classes learned in the past) is enabled to a state in which new classes (novel classes) are learned for classification is enabled. The biggest challenge is to avoid catastrophic forgetting and maintain the performance for base class classification while at the same time acquiring the performance for novel class classification.

On the other hand, new tasks often have only a limited number of sample data items available. Therefore, few-shot learning has been proposed as a method to efficiently learn from a small amount of training data. In few-shot learning, instead of re-learning previously learned parameters, a novel task is learned by using a small number of additional parameters.

A method called incremental few-shot learning (IFSL) has been proposed, which combines continual learning, where a novel class is learned without catastrophic forgetting of the result of learning the base class, and few-shot learning, where a novel class with fewer examples as compared to the base class is learned (Non-Patent Literature 1). In incremental few-shot learning, the base class can be learned from a large-scale dataset, while the novel class can be learned from a small number of sample data items.

### RELATED-ART LITERATURE

### NON-PATENT LITERATURE

[Non-patent Literature 1] Ren, M., Liao, R., Fetaya, E., & Zemel, R. S. (2018). Incremental few-shot learning with attention attractor networks. arXiv preprint arXiv: 1810.07218
[Non-patent Literature 2] Oreshkin, B., Rodriguez Lopez, P., & Lacoste, A. (2018). TADAM: Task dependent adaptive metric for improved few-shot learning. Advances in neural information processing systems, 31
[Non-patent Literature 3] Yoon, S. W., Seo, J., & Moon, J. (2019). TapNet: Neural network augmented with task-adaptive projection for few-shot learning. International Conference on Machine Learning. PMLR

### SUMMARY OF INVENTION

An attention attractor network described in Non-Patent Literature 1 is known as a incremental few-shot learning method. In an attention attractor network, the performance of a base class classifier severely affects the novel class classifier and the attention attractor. Once a base class classifier is created, however, it remains unchanged. Therefore, there has been a problem in that, after a base class classifier is connected to a novel class classifier, the performance of both classifiers is reduced.

The embodiment addresses the issue described above, and a purpose thereof is to provide a machine learning technology capable of suppressing reduction in classification performance after a base class classifier is connected to a novel class classifier.

A machine learning apparatus according to an embodiment is a machine learning apparatus that continually learns a novel class with fewer samples than a base class, including: a feature extraction unit trained for the base class that extracts a feature of input data and generates a feature map; a prototype generation unit that receives the feature map and outputs a prototype of a feature of a class; a base class classification unit that receives the feature map of the input data and classifies the input data into the base class based on a weight of base class classification; a novel class classification that receives the feature map of the input data and classifies the input data into the novel class based on a weight of novel class classification; and a federated classification unit that receives the prototype and the feature map of the input data and classifies the input data into classes based on a weight of federated classification derived from federating the weight of base class classification adjusted based on a metamodel and the weight of novel class classification.

Another mode of the embodiment relates to a machine learning method. The method is a machine learning method that continually learns a novel class with fewer samples than a base class, including: extracting, after being trained for the base class, a feature of input data and generating a feature map; receiving the feature map and outputting a prototype of a feature of a class; receiving, after being trained for the base class, the feature map of the input data and classifying the input data into the base class based on a weight of base class classification; receiving the feature map of the input data and classifying the input data into the novel class based on a weight of novel class classification; and receiving the prototype and the feature map of the input data and classifying the input data into classes based on a weight of federated classification derived from federating the weight of base class classification adjusted based on a metamodel and the weight of novel class classification.

Optional combinations of the aforementioned constituting elements, and implementations of the embodiments in the form of methods, apparatuses, systems, recording mediums, and computer programs may also be practiced as modes of the embodiments.

According to the embodiment, it is possible to suppress reduction in classification performance after a base class classifier is connected to a novel class classifier.

### BRIEF DESCRIPTION OF DRAWINGS

[Fig. 1] Fig. 1 shows a configuration of an attention attractor network.
[Fig. 2] Figs. 2A and 2B show two-stage training.
[Fig. 3] Figs. 3A and 3B illustrate the detail of the second stage training.
[Fig. 4] Fig. 4 illustrates the detail of inner learning of the federated classification unit.
[Fig. 5] Fig. 5 illustrates the detail of outer learning of the federated classification unit.

### DESCRIPTION OF EMBODIMENTS

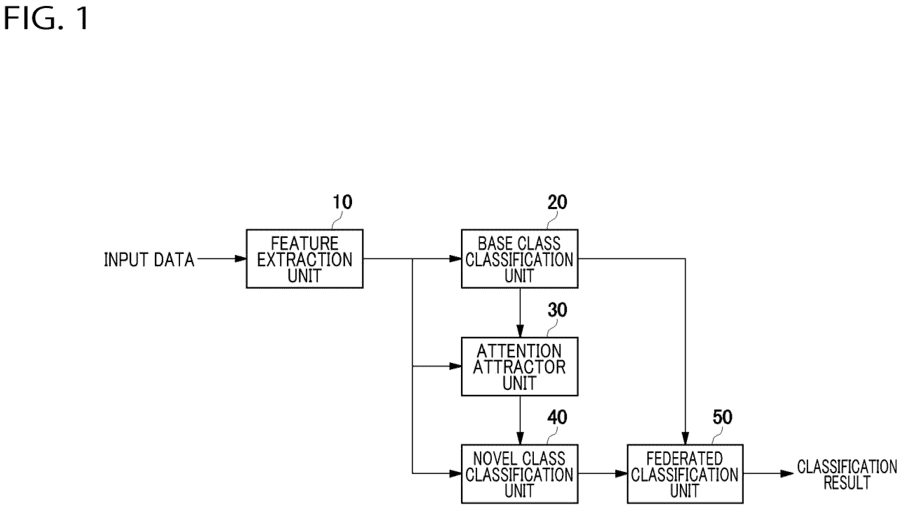

Fig. 1 shows a configuration of an attention attractor network. The attention attractor network includes a feature extraction unit 10, a base class classification unit 20, an attention attractor unit 30, a novel class classification unit 40, and a federated classification unit 50.

The attention attractor network is one of the representative methods of dynamic few-shot learning (DFSL), and the base class classification unit 20 and the novel class classification unit 40 can be federated by using the attention attractor.

The feature extraction unit 10 includes a backbone CNN. The backbone CNN is a convolutional neural network and extracts a feature of input data. The feature of the input data extracted by the backbone CNN is supplied to the base class classification unit 20, the attention attractor unit 30, and the novel class classification unit 40.

The base class classification unit 20 includes a base class classifier and a base class classification weight. The base class dataset is used as training data to pre-train a set comprised of the feature extraction unit 10 and the base class classification unit 20. The base class dataset contains a large number of samples. One example of a sample is an image, but the sample is not limited thereto. The base class classification weight is a weight vector of the base class classifier and indicates an average feature amount of the samples of the base class dataset.

The novel class classification unit 40 includes a novel class classifier and a novel class classification weight for continual learning of a novel class. The novel class classification unit 40 learns a novel class dataset ex post. The number of samples included in the novel class dataset is smaller than the number of samples included in the base class dataset. The novel class classification weight is a weight vector of the novel class classifier and indicates an average feature amount of the samples of the novel class dataset.

Based on the premise that the training data for the base class cannot be used for continual learning, the attention attractor unit 30 controls training such that the knowledge learned in the base class dataset is not forgotten and the inference result is not biased toward the novel class when the novel class dataset is continually learned.

The attention attractor unit 30 regularizes the base class classification weight and the novel class classification weight so that they can be compared on a common feature space. The attention attractor unit 30 calculates information on the regularization term added to the cross-entropy loss of the classification by using information on the base class provided by the base class classification unit 20 and supplies the calculated information to the novel class classification unit 40. The novel class classification unit 40 updates the novel class classification weight to minimize the regularized cross-entropy loss determined by adding the cross-entropy loss and the regularization term.

The federated classification unit 50 binds the classification result by the base class classification unit 20 and the classification result by the novel class classification unit 40 and outputs a final classification result.

In the related-art attention attractor network, the base class classification unit 20 and the novel class classification unit 40 are federated by using the attention attractor such that the base class classification unit 20 trained is fixed and is not changed. The inability of the base class classification unit 20 once created to absorb information on novel classes affects the classification performance of the federated classification unit 50. This is addressed in this embodiment by modifying the created base class classification unit 20 with the information on the novel class to suppress reduction in classification performance after the base class classification unit 20 is connected to the novel class classification unit 40.

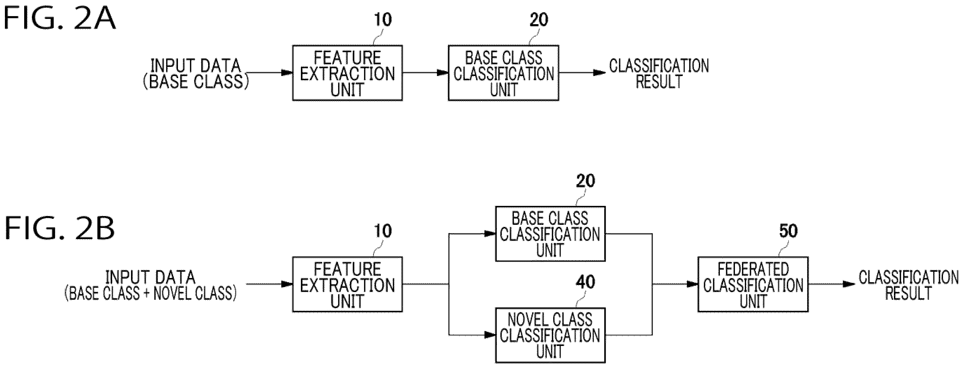

Figs. 2A and 2B show two-stage training.

Fig. 2A shows the first stage training, in which the feature extraction unit 10 and the base class classification unit 20 are trained by using the input data for the base class.

Fig. 2B shows the second stage training, in which the feature extraction unit 10 and the base class classification unit 20 that are trained for the base class in the first stage training are used. In the federated classification unit 50 in which the base class classification unit 20 and the novel class classification unit 40 are federated, the novel class classification unit 40 is trained by using the input data in the base class and the novel class, and the base class classification unit 20 is adjusted based on a metamodel.

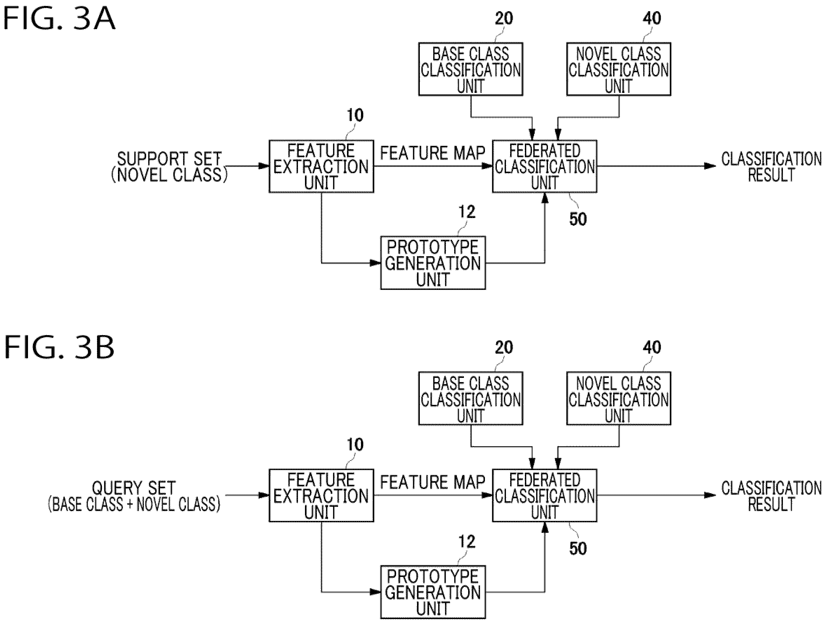

Figs. 3A and 3B illustrate the detail of the second stage training. In the second stage training, episodic input data is used.

Each episode consists of a support set S and a query set Q. The support set S consists of a novel class data set, and the query set Q consists of a base class data set and a novel class data set.

The feature extraction unit 10 has learned the base class in the first stage training. The feature extraction unit 10 extracts a feature of the input data, creates a feature map, and feeds the feature map of the input data to a prototype generation unit 12 and the federated classification unit 50.

The prototype generation unit 12 generates a prototype that is the average value of the feature of the class from the feature map and feeds the prototype to the federated classification unit 50.

The base class classification unit 20 has learned the base class in the first stage training. The base class classification unit 20 receives the feature map of the input data and classifies the input data into the base class based on the weight of base class classification.

The novel class classification unit 40 receives the feature map of the input data and classifies the input data into the novel class based on the weight of novel class classification.

The federated classification unit 50 receives the prototype and the feature map of the input data and classifies the input data into classes based on the weight of federated classification derived from federating the weight of base class classification adjusted based on the metamodel and the weight of novel class classification.

The federated classification unit 50 is a metamodel and performs internal learning and external learning. Learning in the novel class classification unit 40 corresponds to internal learning of the metamodel, and learning in the federated classification unit 50 corresponds to external learning of the metamodel. The input data of the federated classification unit 50 includes the base class classification weight of the base class classification unit 20, the novel class classification weight of the novel class classification unit 40, the feature map of the input data determined by the feature extraction unit 10, and the average value of the feature of the class, i.e., the prototype, determined by the prototype generation unit 12.

Fig. 3A illustrates inner learning. In inner training, a support set S consisting of a novel class data set is given as input data.

In inner learning, the weight of the metamodel is fixed, and the weight of novel class classification is trained to minimize the loss of the classification result by the federated classification unit 50.

Fig. 3B illustrates outer learning. In outer training, a query set Q consisting of a base class data set and a novel class data set is given as input data.

In outer learning, the weight of novel class classification is fixed, and the weight of the metamodel is trained to minimize the loss of the classification result by the federated classification unit 50.

Thus, the training data for inner learning is the support set S, and the training data for outer learning is the query set Q. Inner learning is followed by outer learning. Training from internal learning through outer learning is repeated. In internal training, the weight of the metamodel is not updated, but the weight of novel class classification is updated. In this process, the metamodel trains the novel class classification unit 40 as a regularization term of the novel class classification unit 40. In outer learning, conversely, the weight of novel class classification is not updated, and only the weight of the metamodel is updated.

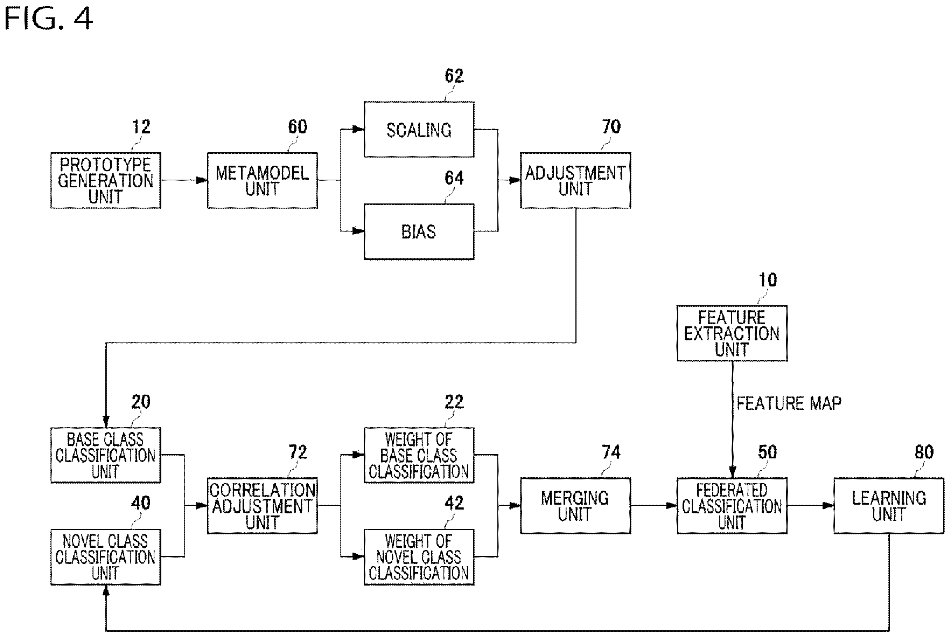

Fig. 4 illustrates the detail of inner learning of the federated classification unit 50. In inner learning, the novel class classification unit 40 with the novel class classification weight being set at a random initial value is trained and is merged with the base class classification unit 20 to create the federated classification unit 50. Thereafter, the feature map of the support set S is input to the federated classification unit 50, and the classification result is output from the federated classification unit 50. The loss is calculated according to this classification result, and the weight of novel class classification in the novel class classification unit 40 is updated by backpropagation of the error.

The prototype generation unit 12 receives the feature map of the input data for the novel class of the support set S, outputs the prototype of the feature of the class, and feeds the prototype to the metamodel unit 60.

The metamodel unit 60 receives the prototype and outputs a scaling matrix 62 and a bias matrix 64 based on the weight of the metamodel and feeds the matrices to the adjustment unit 70.

The adjustment unit 70 adjusts the base class classification weight based on the scaling matrix 62 and the bias matrix 64 by using, as the initial value, the base class classification weight of the base class classification unit 20 trained for the base class in the first stage training. The adjustment unit 70 sets the base class classification weight thus adjusted in the base class classification unit 20.

The correlation adjustment unit 72 calculates the correlation between the base class classification weight of the base class classification unit 20 adjusted by the adjustment unit 70 and the novel class classification weight of the novel class classification unit 40 and adjusts the weight of base class classification and the weight of novel class classification.

The merging unit 74 generates the weight of federated classification by merging a weight 22 of base class classification adjusted by the correlation adjustment unit 72 and a weight 44 of novel class classification adjusted by the correlation adjustment unit 72 and sets the weight of federated classification in the federated classification unit 50.

The federated classification unit 50 receives the feature map of the input data for the support set S from the feature extraction unit 10 and classifies the input data for the support set S into classes based on the weight of federated classification.

A learning unit 80 fixes the weight of the metamodel of the metamodel unit 60, calculates the loss of the classification result by the federated classification unit 50, and trains the novel class classification weight of the novel class classification unit 40 to minimize the loss.

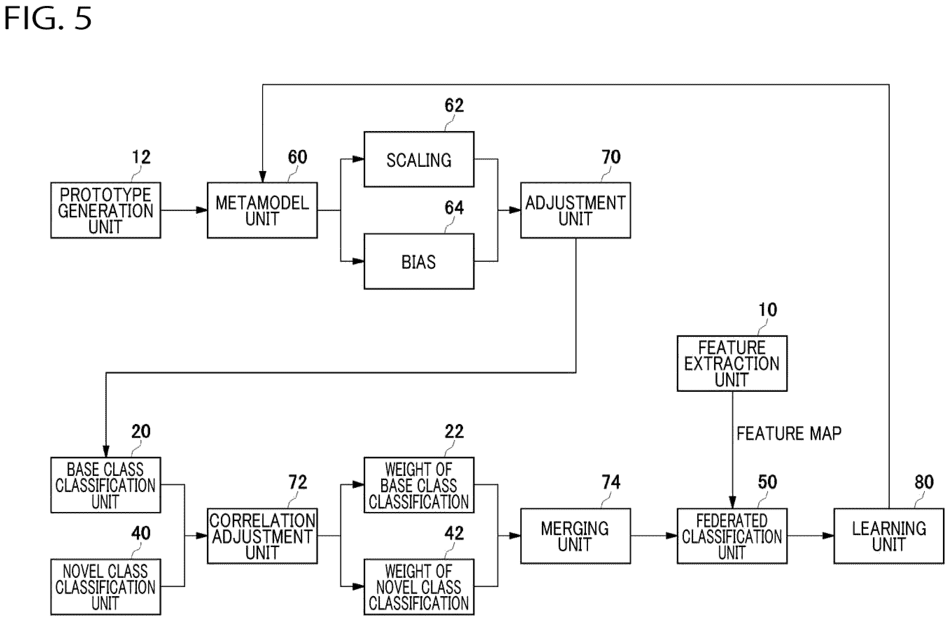

Fig. 5 illustrates the detail of outer learning of the federated classification unit 50. In outer learning, the weight of novel class classification of the novel class classification unit 40 trained by inner learning is fixed, the weight of the metamodel of the metamodel unit 60 is trained, and the base class classification unit 20 adjusted by the metamodel is merged with the novel class classification unit 40 to create the federated classification unit 50. Thereafter, the feature map of the query set Q is input to the federated classification unit 50, and the classification result is output from the federated classification unit 50. The loss is calculated according to this classification result, and the weight of the metamodel of the metamodel unit 60 is updated by backpropagation of the error.

The prototype generation unit 12 receives the feature map of the input data for the base class and the novel class of the query set Q, outputs the prototype of the feature of the class, and feeds the prototype to the metamodel unit 60.

The metamodel unit 60 receives the prototype and outputs a scaling matrix 62 and a bias matrix 64 based on the weight of the metamodel and feeds the matrices to the adjustment unit 70.

The adjustment unit 70 adjusts the base class classification weight based on the scaling matrix 62 and the bias matrix 64 by using, as the initial value, the base class classification weight of the base class classification unit 20 trained by inner learning. The adjustment unit 70 sets the base class classification weight thus adjusted in the base class classification unit 20.

The correlation adjustment unit 72 calculates the correlation between the base class classification weight of the base class classification unit 20 adjusted by the adjustment unit 70 and the novel class classification weight of the novel class classification unit 40 and adjusts the weight of base class classification and the weight of novel class classification.

The merging unit 74 generates the weight of federated classification by merging the weight 22 of base class classification adjusted by the correlation adjustment unit 72 and the weight 44 of novel class classification adjusted by the correlation adjustment unit 72 and sets the weight of federated classification in the federated classification unit 50.

The federated classification unit 50 receives the feature map of the input data for the query set Q from the feature extraction unit 10 and classifies the input data for the query set Q into classes based on the weight of federated classification.

The learning unit 80 fixes the weight of novel class classification of the novel class classification unit 40, calculates the loss of the classification result by the federated classification unit 50, and trains the weight of the metamodel of the metamodel unit 60 to minimize the loss.

The metamodel of the metamodel unit 60 trained in outer learning is used when training the novel class classification unit 40 in inner learning in the next episode. In essence, the metamodel is continually trained for each episode and grows to a metamodel capable of adjusting the base class classification unit 20 to suit any novel class. The metamodel outputs a scaling matrix and a bias matrix according to the input prototype, and these matrices are used to modify the base class classification unit 20. As a result, the base class classification unit 20 will be adjusted by using the information on the novel class. Therefore, the base class classification unit 20 adjusted by the metamodel can be easily federated with the novel class classification unit 40. The detail of adjustment of the base class classification unit 20 by the adjustment unit 70 is described in Non-Patent Literature 2.

Further, the correlation adjustment unit 72 understands the correlation between the adjusted base class classification unit 20 and the novel class classification unit 40 and calculates the degrees of importance of the base class classification unit 20 and the novel class classification unit 40. According to these degrees of importance, the merging unit 74 projects the weight of base class classification of the base class classification unit 20 and the weight of novel class classification of the novel class classification unit 40 to a new feature space and creates the weight of federated classification of the federated classification unit 50 there. The detail of the operation of correlation adjustment unit 72 and the merging unit 74 is described in Non-Patent Literature 3.

The above-described various processes in the machine learning apparatus 100 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, according to this embodiment, the base class classifier created is modified by the information on the novel class so that the classification performance is not reduced after the base class classifier is connected to the novel class classifier.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

### INDUSTRIAL APPLICABILITY

The present invention can be applied to machine learning technologies.

### REFERENCE SIGNS LIST

10 feature extraction unit, 12 prototype generation unit, 20 base class classification unit, 30 attention attractor unit, 40 novel class classification unit, 50 federated classification unit, 60 metamodel unit, 70 adjustment unit 70, correlation adjustment unit, 74 merging unit, 80 learning unit

## Claims

1. A machine learning apparatus that continually learns a novel class with fewer samples than a base class, comprising:
a feature extraction unit trained for the base class that extracts a feature of input data and generates a feature map;
a prototype generation unit that receives the feature map and outputs a prototype of a feature of a class;
a base class classification unit that receives the feature map of the input data and classifies the input data into the base class based on a weight of base class classification;
a novel class classification unit that receives the feature map of the input data and classifies the input data into the novel class based on a weight of novel class classification; and
a federated classification unit that receives the prototype and the feature map of the input data and classifies the input data into classes based on a weight of federated classification derived from federating the weight of base class classification adjusted based on a metamodel and the weight of novel class classification.

2. The machine learning apparatus according to claim 1, further comprising: a learning unit that, when a support set consisting of data for the novel class is given as the input data, fixes the weight the metamodel, calculates a loss of a result of classification by the federated classification unit, and trains the weight of novel class classification to minimize the loss.

3. The machine learning apparatus according to claim 2, wherein the learning unit that, when a query set consisting of data for the base class and data for the novel class is given as the input data, fixes the weight of novel class classification, calculates a loss of result of classification by the federated classification unit, and trains the weight of the metamodel to minimize the loss.

4. The machine learning apparatus according to any one of claim 1 through 3, further comprising:
a metamodel unit that receives the prototype and outputs a scaling matrix and a bias matrix based on a weight of the metamodel;
an adjustment unit that adjusts the weight of base class classification based on the scaling matrix and the bias matrix;
a correlation adjustment unit that calculates correlation between the weight of base class classification adjusted by the adjustment unit and the weight of novel class classification to adjust the weight of base class classification and the weight of novel class classification; and
a merging unit that merges the weight of base class classification adjusted by the correlation adjustment unit and the weight of novel class classification adjusted by the correlation adjustment unit to generate the weight of federated classification and feeds the weight of federated classification to the federated classification unit.

5. A machine learning method that continually learns a novel class with fewer samples than a base class, comprising:
extracting, after being trained for the base class, a feature of input data and generating a feature map;
receiving the feature map and outputting a prototype of a feature of a class;
receiving, after being trained for the base class, the feature map of the input data and classifying the input data into the base class based on a weight of base class classification;
receiving the feature map of the input data and classifying the input data into the novel class based on a weight of novel class classification; and
receiving the prototype and the feature map of the input data and classifying the input data into classes based on a weight of federated classification derived from federating the weight of base class classification adjusted based on a metamodel and the weight of novel class classification.

6. A machine learning program that continually learns a novel class with fewer samples than a base class, comprising computer-implemented modules including:
a module that extracts, after being trained for the base class, a feature of input data and generates a feature map;
a module that receives the feature map and outputs a prototype of a feature of a class;
a module that receives, after being trained for the base class, the feature map of the input data and classifies the input data into the base class based on a weight of base class classification;
a module that receives the feature map of the input data and classifies the input data into the novel class based on a weight of novel class classification; and
a module that receives the prototype and the feature map of the input data and classifies the input data into classes based on a weight of federated classification derived from federating the weight of base class classification adjusted based on a metamodel and the weight of novel class classification.
